# FASCICULE DE BREVET EUROPEEN

(11) **EP 1 531 297 B1**
(45) Date de publication et mention de la délivrance du brevet: **27.12.2006**
(21) Numéro de dépôt: 04356180.2
(22) Date de dépôt: 10.11.2004
(51) Int. Cl.: F16L 37/22

(54) **Elément femelle de raccord et raccord rapide incorporant un tel élément**
Weiblicher Steckverbinder und Schnellkupplung und Vorrichtung die ein solches Element enthält
Female connection element and quick coupling comprising such an element

(30) Priorité: 13.11.2003 FR 0313291
(43) Date de publication de la demande: 18.05.2005
(73) Titulaire: STÄUBLI FAVERGES, 74210 Faverges (FR)
(72) Inventeur: Tiberghien, Alain-Christophe, 74320 Sevrier (FR); Chambaud, Antoine, 74210 Giez (FR)
(74) Mandataire: Myon, Gérard Jean-Pierre

(56) Documents cités:
- GB-A- 2 036 906
- US-A- 2 092 116
- US-A- 2 344 740
- US-A- 2 433 119
- US-A- 3 133 755
- US-A- 3 188 123
- US-A- 3 468 562

## Description

L'invention a trait à un élément femelle de raccord rapide ainsi qu'à un raccord rapide pour une installation de manutention de fluide sous pression qui comprend, entre autres, un tel élément femelle.

Dans le domaine de la jonction amovible de canalisations parcourues par un fluide sous pression, il est connu d'utiliser un élément femelle de raccord qui comprend des moyens commandés de verrouillage d'un about mâle en configuration emmanchée dans l'élément femelle, c'est-à-dire en configuration raccordée des canalisations. Il est par exemple connu de EP-A-0 900 966 d'utiliser des billes de verrouillage montées dans l'élément femelle et prévues pour être sélectivement engagées dans une gorge périphérique externe d'un about mâle.

Les contacts multiples entre les billes de l'élément femelle et la gorge de l'about mâle lors des emmanchements successifs de ces éléments induisent une usure et/ou un matage localisés qui peuvent conduire à la création de bourrelets ou d'incrustations susceptibles de gêner le bon fonctionnement du raccord. Or, dans certaines applications telles que le remplissage de réservoirs de véhicules automobiles en gaz de pétrole liquéfié (GPL), la pression du fluide transitant par un tel raccord peut être de l'ordre de 250 bars, ce qui implique des contraintes importantes sur les éléments constitutifs du raccord et accélère les phénomènes d'usure et/ou de matage, au point que la durée de vie d'un tel raccord peut être sensiblement diminuée.

Il est connu, par exemple de GB-A-2 036 906 ou de US-A-3,468,562 d'utiliser des coins glissants selon des directions obliques par rapport à l'axe d'emmanchement des éléments mâle et femelle d'un raccord pour immobiliser ces éléments en configuration emmanchée. Ces coins sont de forme complexe. Ils nécessitent des usinages sophistiqués et coûteux. En outre, leur forme induit des risques importants de coincement de ces coins.

Par ailleurs, US-A-2,433,119 et US-A-3,188,123 enseignent d'utiliser des pions cylindriques qui sont plus économiques que les coins précités. Ces pions ont une portée linéique, selon un segment de leur génératrice, dans la gorge de l'élément mâle. Le rayon de courbure des pions étant faible, il en résulte des pressions de contact élevées. Cette portée est donc sujette à une usure rapide et induit le matage de l'élément mâle. Pour pouvoir être manoeuvrés, ces pions doivent collaborer avec deux bagues coaxiales et solidaires dont l'une attaque les pions au voisinage de leur extrémité avant et dont l'autre agit au voisinage de leur extrémité arrière. Ceci induit un encombrement radial excessif.

Enfin, US-A-2,344,790 enseigne d'utiliser des doigts de verrouillage coulissant selon une direction inclinée par rapport à l'axe d'emmanchement des éléments mâle et femelle d'un raccord rapide. Chaque doigt se prolonge par une patte pourvue d'une tête destinée à interagir avec une bague de manoeuvre. Par défaut, un ressort repousse chaque doigt vers une position où il fait saillie vers l'axe d'emmanchement par rapport au corps de l'élément femelle. Cette position n'est pas définie précisément, ce qui peut rendre imprécis l'accrochage des éléments mâle et femelle en configuration emmanchée, la partie de l'élément mâle recevant les doigts de verrouillage pouvant être marquée ou matée par ces doigts.

C'est à ces inconvénients qu'entend plus particulièrement remédier l'invention, en proposant un nouvel élément femelle de raccord rapide susceptible de coopérer avec un élément mâle de géométrie connue, sans induire d'usure ou de matage trop importants des parties de ces éléments utilisés pour leur verrouillage en configuration emmanchée.

Dans cet esprit, l'invention concerne un élément femelle de raccord rapide de sécurité destiné à la jonction amovible de canalisations de fluide sous pression, cet élément étant apte à recevoir, en emmanchement selon un axe longitudinal, un élément mâle, tout en étant équipé de moyens de verrouillage de cet élément mâle en configuration emmanchée ces moyens comprenant au moins un organe allongé mobile en translation parallèlement à un axe oblique par rapport à l'axe d'emmanchement de ces éléments, alors que cet organe est pourvu d'une partie cylindrique dont une extrémité est destinée à être engagée dans une gorge périphérique d'un élément mâle emmanché dans l'élément femelle, l'extrémité précitée étant délimitée en partie par une surface d'appui contre un côté de la gorge, alors que l'organe est pourvu d'une patte faisant saillie radialement par rapport à une surface radiale externe du corps de cet élément femelle et qui est engagée entre deux reliefs interne d'une bague de commande de la position de l'organe, cette bague étant montée autour de ce corps avec possibilité de translation parallèlement à l'axe d'emmanchement. Cet élément de raccord est caractérisé en ce que l'organe de verrouillage est pourvu d'un talon d'appui sur une butée de retenue formée par un logement ménagé dans le corps dans lequel l'organe précité est monté coulissant et retenu prisonnier.

Grâce à l'invention, l'organe ou doigt de verrouillage allongé remplit efficacement sa fonction de blocage d'un about mâle en configuration emmanchée et peut avoir une géométrie évitant des contraintes localisées élevées sur l'about mâle, d'où une limitation de l'usure et du matage induits par les manipulations successives du raccord. La surface globalement d'appui, qui est distincte de la surface d'enveloppe de la partie cylindrique, peut venir en contact surfacique ou quasi-surfacique sur un bord de la gorge de l'élément femelle, ce qui limite l'usure. La patte permet un contrôle de l'orientation angulaire de la partie cylindrique de l'organe allongé autour de son axe central, ce qui garantit une orientation correcte de la surface d'appui contre le bord de la gorge précitée. En outre, cette patte permet de commander, grâce aux deux reliefs de la bague extérieure et par l'extérieur du corps de l'élément femelle, les déplacements de l'organe allongé dans les deux sens, c'est-à-dire en direction de la gorge de l'élément femelle ou à l'opposé de celle-ci.

Selon des aspects avantageux mais non obligatoires, un élément femelle de raccord rapide peut incorporer une ou plusieurs des caractéristiques des revendications dépendantes.

L'invention concerne également un raccord rapide pour une installation de manutention de fluide sous pression qui comprend deux éléments mâle et femelle et dont l'élément femelle est tel que décrit ci-dessus.

Un tel raccord est plus fiable et plus durable que ceux de l'état de la technique. Il trouve une application particulièrement intéressante dans le domaine du remplissage des réservoirs de véhicules automobiles, auquel cas l'élément ou embout mâle est raccordé à une canalisation d'alimentation d'un réservoir de carburant de véhicule.

L'invention sera mieux comprise et d'autres avantages de celle-ci apparaîtront plus clairement à la lumière de la description qui va suivre d'un mode de réalisation d'un élément femelle et d'un raccord rapide conformes à son principe, donnée uniquement à titre d'exemple et faite en référence aux dessins annexés dans lesquels :
- la figure 1 est une coupe longitudinale de principe d'un élément femelle de raccord conforme à l'invention ;
- la figure 2 est une coupe longitudinale d'un raccord conforme à l'invention incorporant l'élément femelle de la figure 1 lors de l'emmanchement de ses éléments mâle et femelle ;
- la figure 3 est une vue analogue à la figure 2 lorsque les éléments mâle et femelle sont en position emmanchée ou accouplée ;
- la figure 3A est une vue à plus grande échelle du détail 3A à la figure 3 ; et
- la figure 4 est une vue en perspective et à plus grande échelle d'un doigt de verrouillage de l'élément femelle représenté aux figures 1 à 3.

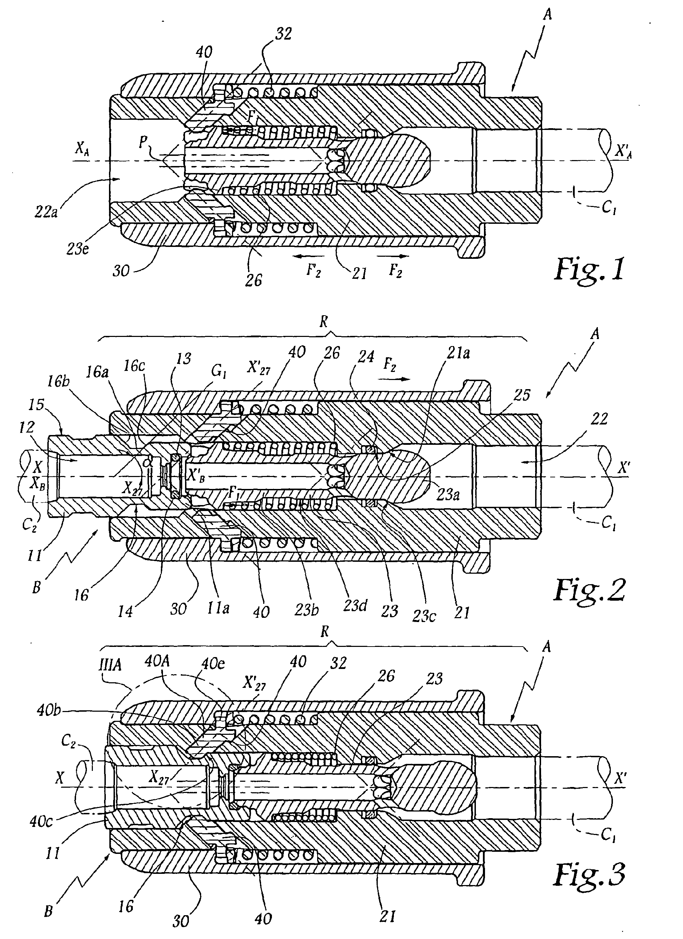

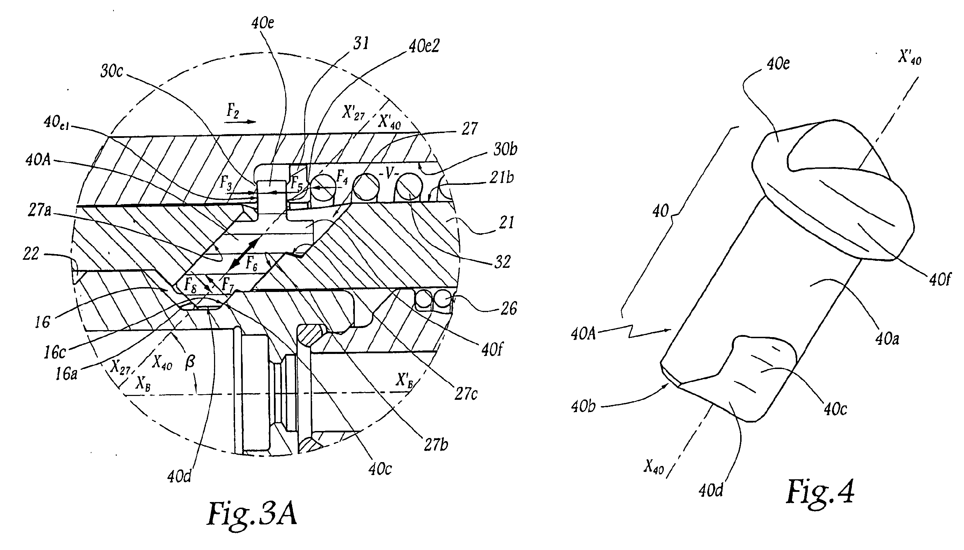

Le raccord rapide R représenté sur les figures 2 et 3 comprend un élément femelle A et un élément ou about mâle B prévus pour s'emmancher l'un dans l'autre dans la direction d'un axe X-X' qui est, en pratique, un axe longitudinal commun aux éléments A et B.

La partie arrière de l'élément femelle A est raccordée fluidiquement à une première canalisation C₁, alors que la partie arrière de l'about B est raccordée à une seconde canalisation C₂. L'about B est monté sur un véhicule automobile et la canalisation C₂ sert à alimenter le réservoir de carburant non représenté de ce véhicule en gaz sous une pression de l'ordre de 250 bars, alors que l'élément femelle A est relié par la canalisation C₁ à une source non représentée de carburant sous pression, par exemple de GPL. Dans ce cas, l'élément femelle A peut équiper une station service et être destiné à coopérer successivement avec les abouts mâles B montés sur différents véhicules automobiles.

L'about B comprend un corps tubulaire 11 sur lequel est raccordée la canalisation C₂ et définissant un canal interne 12 de circulation de fluide. Ce canal peut constituer un logement pour un clapet anti-retour non représenté. Un joint torique 13 est monté dans une gorge périphérique interne 14 du corps 11.

Sur sa surface radiale externe 15, le corps 11 est pourvu d'une gorge périphérique 16 dont le profil est défini par un fond 16a plat et des côtés 16b et 16c divergent en s'éloignant du fond 16a. Ainsi, le fond 16a est cylindrique, alors que les côtés 16b et 16c sont tronconiques.

L'about B est à symétrie de révolution autour d'un axe X_{B}-X'_{B} qui est confondu avec l'axe X-X' lors de l'emmanchement de cet about dans l'élément femelle A.

On note G₁ la génératrice de la surface du côté 16c de la gorge 16 qui est le plus proche de l'extrémité 11a du corps 11 destinée à être introduite dans l'élément A. Cette génératrice est rectiligne et oblique par rapport à l'axe X_{B}-X'_{B}, avec un angle d'obliquité α égal à environ 45°. La surface engendrée par la génératrice G₁ est donc une surface tronconique de demi-angle au sommet α.

L'élément femelle A comprend un corps 21 également tubulaire et sur lequel est raccordée la canalisation C₁. Ce corps définit un canal central 22 dans lequel est disposé un clapet 23 mobile parallèlement à un axe X_{A}-X'_{A} qui est un axe central de l'élément A confondu avec l'axe X-X' lors de l'emmanchement des éléments A et B.

Le clapet 23 est pourvu d'une partie pleine 23a et d'une partie creuse 23b, la partie pleine 23a ayant une surface externe 23c cylindrico-conique destinée à venir en appui contre un siège 21a formé par le corps 21. Un joint torique 24 est installé dans une gorge interne 25 du corps 21 et est destiné à assurer l'étanchéité avec la surface 23c ou avec la surface radiale externe 23d de la partie 23b.

Un ressort 26 exerce sur une collerette 23e du clapet 23 un effort élastique F₁ tendant à plaquer la partie 23a contre le siège 21a, c'est-à-dire à fermer l'élément femelle A.

Une bague 30 est montée autour du corps 21 et est mobile en translation par rapport à celui-ci et parallèlement à l'axe X_{A}-X'_{A}, comme représenté par les flèches F₂ et F'₂.

Deux doigts de verrouillage 40 sont prévus pour être partiellement engagés dans la gorge 16 de l'élément B dans la configuration emmanchée représentée à la figure 3.

Chaque doigt 40 est disposé dans un logement 27 ménagé dans le corps 21, les dimensions du logement 27 étant telles que les surfaces 27a et 27b délimitant le logement peuvent coopérer avec la surface externe 40a d'une partie cylindrique 40A, à génératrice droite et à base circulaire, du doigt 40 pour guider ce doigt en translation.

La surface 27b forme une butée 27c sur laquelle vient en appui un talon 40f du doigt 40, ce qui limite le mouvement du doigt vers le canal 22. Le doigt 40 est ainsi prisonnier dans le logement 27.

Le logement 27 est débouchant à la fois au niveau du canal 22 et au niveau d'un volume V défini entre la surface radiale externe 21b du corps 21 et la surface radiale interne 30b de la bague 30.

Le logement 27, représenté à plus grande échelle à la figure 3A, s'étend dans la direction d'un axe X₂₇-X'₂₇ qui est oblique par rapport à l'axe X_{A}-X'_{A}, c'est-à-dire à l'axe X-X' lorsque les éléments mâle et femelle sont en configuration d'emmanchement. On note β l'angle d'obliquité entre les axes X₂₇-X'₂₇ et X_{B}-X'_{B}. Cet angle est choisi égal à l'angle α.

En pratique, les angles α et β peuvent avoir des valeurs comprises entre 15 et 65°, de préférence entre 30 et 55°. Des résultats satisfaisants ont pu être obtenu avec une valeur de α et β égale à 45°.

Les axes X₂₇-X'₂₇ et X_{A}-X'_{A} sont convergents en direction de l'embouchure 22a du canal 22 par laquelle est introduit l'about B.

Le doigt 40 est pourvu d'une extrémité 40b qui est destinée à faire saillie dans le canal 22 à partir du logement 27 pour être engagée dans la gorge 16 et qui est délimitée par une surface 40c tronconique et concave, de demi-angle au sommet, par rapport à l'axe longitudinal X₄₀-X'₄₀ de la partie 40A du doigt 40, de valeur égale à celle de β et de rayon de courbure analogue à celui de la surface formant le côté 16c, de telle sorte que l'extrémité 40b et le côté 16c sont complémentaires au niveau de la surface 40c, ce qui garantit un appui surfacique entre le doigt 40 et le corps 11 à l'interface 40c/16c.

L'extrémité 40b est également délimitée par une surface 40d en portion de cylindre, à section circulaire et de géométrie complémentaire de celle du fond 16a de la gorge 16.

Il est ainsi possible d'obtenir un appui du doigt 40 dans la gorge 16 à la fois sur son fond 16a et sur son côté 16c. Comme représenté aux figures 3 et 3A, l'extrémité 40b peut être en appui sur le bord 16c sans interférence de la surface 40d avec le fond 16a du fait que la coopération de la surface 27c et du talon 40f limite le déplacement centripète du doigt 40. Dans la mesure où elle ne vient pas en appui contre le fond 16a, la surface 40d peut avoir une géométrie autre que celle mentionnée ci-dessus. Elle peut être aplatie, pour autant qu'elle ne gène pas l'appui surfacique entre la surface 40c et le bord 16c.

Lorsqu'il est en place dans le logement 27, le doigt 40 a son axe X₄₀-X'₄₀ confondu avec l'axe X₂₇-X'₂₇.

Le doigt 40 est également pourvu d'une patte 40e faisant saillie radialement par rapport à la surface 21b à l'extérieur du logement 27 et qui est engagée entre un épaulement 30c ménagé sur la surface interne 30b de la bague 30 et une bague secondaire 31 solidaire de la bague 30.

Ainsi, lorsque la bague 30 est déplacée en direction de l'arrière du corps 21, c'est-à-dire en direction de la canalisation C₁, par un effort dans le sens des flèches F₂ aux figures 2 et 3A, l'épaulement 30c exerce sur une première surface 40e1 de la patte 40e un effort F₃ qui a pour effet de déplacer le doigt 40 en appui sur les surfaces 27b et 27c, ce qui, compte-tenu de l'obliquité de l'axe X₂₇-X'₂₇, induit un déplacement à la fois axial et radial du doigt 40, parallèlement à son axe longitudinal X₄₀-X'₄₀, au point que son extrémité 40b est extraite de la gorge 16 et du canal 22. Le doigt ne s'oppose alors pas à un retrait de l'about B du canal 22.

Lorsque l'effort exercé sur la bague 30 est relâché, un ressort 32 installé dans le volume V exerce sur la bague 31 un effort de rappel élastique F₄ qui est transmis, sous la forme d'un effort F₅ s'exerçant sur une seconde surface 40e2 de la patte 40e opposée à la surface 40e1, à chaque doigt 40 qui est alors déplacé dans le sens inverse du mouvement précédemment mentionné pour atteindre la position représentée aux figure 1 et 3 où il fait saillie dans le canal 22.

Les surfaces 40e1 et 40e2 sont parallèles entre elles et globalement radiales par rapport à l'axe X_{A}-X'_{A}, ce qui leur permet de recevoir de façon franche les efforts F₃ et F₅ tout en pouvant glisser entre les surfaces de l'épaulement 30c et de la bague 31 contre lesquelles elles sont en appui, entre les positions respectivement représentées aux figures 2 et 3, l'écartement des parties 30c et 31 demeurant alors sensiblement constant.

En l'absence d'effort exercé sur la bague 30 par l'utilisateur, l'effort F₄ assure également le maintien des doigts 40 dans la configuration des figures 3 et 3A où ils verrouillent l'about B en configuration emmanchée dans le corps 21.

Il ressort de ce qui précède que chaque doigt 40 a un mouvement de translation représenté par la double flèche F₆, commandé uniquement grâce à la bague 30 et qui a lieu parallèlement aux axes X₂₇-X'₂₇ et X₄₀-X'₄₀. En particulier, il n'est pas nécessaire d'agir au niveau de l'extrémité 40b pour faire coulisser la partie cylindrique 40A de sa position de la figure 3 à celle de la figure 2 car le doigt 40 est commandé par l'arrière, c'est-à-dire par son côté opposé à l'extrémité 40b.

La surface 40c permet un appui surfacique ou quasi-surfacique contre le bord 16c, ce qui est avantageux en termes d'usure. Bien entendu, en fonction de la géométrie du bord 16c, la géométrie de la surface 16c peut être adaptée : Elle peut ne pas être rigoureusement tronconique mais globalement tronconique. Elle peut également être globalement aplatie par rapport à la surface 40a, auquel cas l'appui de la surface 40c sur le bord 16c est quasi-surfacique dans la mesure où les surfaces voisines des points de contact sont très proches l'une de l'autre. Elle peut également être convexe, avec un rayon de courbure strictement supérieur à celui de la surface 40a, ce qui évite de mater le côté 16c par la surface 40c.

Dans tous les cas, la surface 40c est différente de l'enveloppe de la partie 40A qui définit la surface 40a, ce qui lui permet d'avoir une concavité et/ou un rayon de courbure différents de celui de cette surface 40a. La partie 40A peut donc être relativement fine et le logement 27 peut être peu volumineux, sans pour autant que des pressions de contact élevées ne soient générées à l'interface entre le doigt 40 et le corps 11, c'est-à-dire entre les surfaces 40c et 16c.

Compte tenu de cette fonction de la surface 40c, il convient de contrôler l'orientation angulaire de la partie 40A autour de l'axe X₄₀-X'₄₀ pour garantir que la surface 40c est bien tournée dans la direction du bord 16c. Cet objectif est atteint grâce à la patte 40c qui, en dépassant dans le volume V entre les éléments 30c et 31, évite que le doigt ne tourne autour de cet axe. En d'autres termes, la géométrie du doigt 40 au niveau de la patte 40e permet d'assurer l'orientation angulaire de sa partie cylindrique 40A.

On comprend que, lorsqu'on souhaite emmancher l'about B dans l'élément femelle A, on peut exercer l'effort F₂ comme représenté à la figure 2, ce qui permet de dégager les doigts 40 du canal 22, l'effort d'accouplement à exercer étant alors principalement utilisé pour repousser le clapet 23 à l'encontre de la pression régnant dans la partie amont du conduit 22.

Comme les bagues 30 et 31 s'étendent tout autour du corps 21, elles permettent de commander, simultanément, tous les doigts 40 coulissant dans des logements correspondants 27 du corps 21.

Il est également possible d'emmancher les éléments A et B sans agir sur la bague 30, l'extrémité 11a du corps 11 repoussant alors temporairement les doigts 40 vers l'intérieur des logements 27.

Dans la configuration des figures 3 et 3A, chaque doigt 40 est sollicité essentiellement en compression entre le côté 16c de la gorge 16 qui exerce un effort F₇ normal à la surface 40c et la surface 27a qui exerce un effort F₈ antagoniste à l'effort F₇ et normal à la surface 40a.

Ces efforts F₇ et F₈ peuvent être importants, notamment en fonction de la pression du fluide transitant par le raccord R, sans risque de déformation ou de matage des organes 11, 21 et 40 puisque ceux-ci sont en appui essentiellement surfacique les uns sur les autres.

Il convient de noter également que les efforts F₇ et F₈ n'induisent pas d'effort sur la bague 30 qui peut être ainsi aisément manoeuvrée indépendamment de la pression du fluide.

Les surfaces 27a, 27b et la surface correspondante 40a du doigt 40 sont globalement parallèles à l'axe X₂₇-X'₂₇. Selon une variante non représentée de l'invention, elles peuvent être en légère contre-dépouille.

Les axes X₂₇-X'₂₇ des logements 27 représentés sont sécants avec l'axe X_{B}-X'_{B} ou avec l'axe X-X' d'emmanchement en un point P. En variante, ils peuvent être légèrement décalés par rapport à ceux ci, tout en conservant leur caractère oblique.

L'invention peut être mise en oeuvre avec un seul doigt de verrouillage ou avec plus de deux doigts de verrouillage, selon les choix de l'homme du métier. Le fait d'utiliser au moins deux doigts de verrouillage permet de répartir l'effort de blocage de l'about mâle en configuration emmanchée autour de l'axe X-X'.

Dans tous les cas, l'élément femelle A du raccord est adapté à un élément mâle standard qui peut être monté en grand nombre, par exemple sur des véhicules automobiles. L'invention ne nécessite pas de modifier les éléments mâles déjà utilisés sur des véhicules automobiles.

L'invention peut être utilisée dans des domaines autres que celui du remplissage des réservoirs de véhicules automobiles, de façon générale dans tout domaine où un raccordement sécurisé est recherché.

## Revendications

1. Elément femelle (A) de raccord rapide (R) de sécurité destiné à la jonction amovible de canalisations (C₁, C₂) de fluide sous pression, ledit élément étant apte à recevoir, en emmanchement selon un axe longitudinal (X-X') dudit élément, un élément mâle (B), ledit élément femelle étant équipé de moyens de verrouillage dudit élément mâle en configuration emmanchée desdits éléments, lesdits moyens de verrouillage comprenant au moins un organe (40) allongé, mobile en translation parallèlement à un axe (X₂₇-X'₂₇) oblique par rapport à l'axe d'emmanchement desdits éléments, ledit organe étant pourvu d'une partie cylindrique (40A) dont une extrémité (40b) est destinée à être engagée dans une gorge périphérique d'un élément mâle emmanché dans ledit élément femelle, ladite extrémité (40b) étant partiellement délimitée par une surface (40c) d'appui contre un côté (16c) de ladite gorge (16), alors que ledit organe (40) est pourvu d'une patte (40e) faisant saillie radialement par rapport à une surface radiale externe (21b) du corps (21) dudit élément femelle (A) et qui est engagée entre deux reliefs internes (30c, 31) d'une bague (30) de commande de la positon dudit organe, ladite bague étant montée autour dudit corps avec possibilité de translation (F₂, F'₂) parallèlement audit axe d'emmanchement (X-X') **caractérisé en ce que** ledit organe (40) est pourvu d'un talon (40f) d'appui sur une butée (27c) de retenue formée par un logement (27) ménagé dans le corps (21) dans lequel ledit organe est monté coulissant et retenu prisonnier.

2. Elément de raccord selon la revendication 1, **caractérisé en ce que** ladite surface d'appui (40c) est concave, ou convexe, avec un rayon de courbure strictement supérieur au rayon de ladite partie cylindrique (40A), ou globalement aplatie.

3. Elément de raccord selon l'une des revendications précédentes, **caractérisé en ce que** ladite patte (40e) est pourvue de deux surfaces (40e1, 40e2) globalement radiales par rapport audit axe d'emmanchement (X-X') et recevant respectivement chacune en appui (F₃, F₄) l'un desdits reliefs (30c, 31).

4. Elément de raccord selon l'une des revendications précédentes, **caractérisé en ce que** ladite surface (40c) est tronconique et concave avec un demi-angle au sommet, par rapport à l'axe longitudinal (X₄₀-X'₄₀) dudit organe (40), de valeur sensiblement égale à celle de l'angle (β) d'obliquité de l'axe (X₂₇-X'₂₇) parallèlement auquel ledit organe est mobile.

5. Elément de raccord la revendication 4, **caractérisé en ce que** le rayon de courbure de ladite surface tronconique (40c) est analogue à celui dudit côté (16c), ladite extrémité (40b) et ledit côté étant ainsi complémentaires.

6. Elément de raccord selon l'une des revendications précédentes, **caractérisé en ce que** ladite extrémité (40b) est également délimitée par une surface (40d) en portion de cylindre à section circulaire et de géométrie complémentaire de celle du fond (16a) d'une gorge périphérique (16) d'un élément mâle (B) apte à être emmanché dans ledit élément femelle (A).

7. Elément de raccord selon l'une des revendications précédentes, **caractérisé en ce que** ladite bague (30) est chargée élastiquement (F₄) vers une position dans laquelle un relief (31) exerce sur ladite patte (40e) un effort (F₅) tendant à pousser ledit organe vers une position de blocage d'un élément mâle (B), alors qu'un second relief (30c) de ladite bague permet d'exercer sur ladite patte un effort (F₃) tendant à dégager ledit organe par rapport audit élément mâle.

8. Raccord rapide pour installation de manutention de fluide sous pression comprenant deux éléments mâle (B) et femelle (A) fixés aux extrémités de deux portions de canalisations (C₁, C₂) et propres à s'emmancher axialement l'un dans l'autre, **caractérisé en ce que** l'élément femelle (A) est selon l'une des revendications précédentes.

9. Raccord rapide selon la revendication 8, **caractérisé en ce que** ledit élément mâle (B) est pourvu d'une gorge périphérique externe (16) de réception d'une partie (40b) dudit organe allongé (40), ladite gorge étant délimitée, entre autres, par une surface globalement tronconique (16c) et **en ce que** l'angle d'obliquité (β) entre l'axe (X₂₇-X'₂₇) parallèlement auquel est mobile (F₆) ledit organe (40) et l'axe d'emmanchement (X-X') desdits éléments mâle (B) et femelle (A) a une valeur sensiblement égale au demi-angle au sommet (α) de ladite surface globalement tronconique.

10. Utilisation d'un raccord rapide selon l'une des revendications 8 ou 9 dans un véhicule automobile, **caractérisé en ce que** ledit élément mâle (B) est monté sur ledit véhicule automobile et raccordé à une canalisation (C₂) d'alimentation du réservoir de carburant dudit véhicule.

## Claims

1. Female element of a secure quick-connection joint (R) designed for the detachable connection of pipes (C₁, C₂) carrying fluid under pressure, the said element being able to receive a male element (B) by fitting insertion along a longitudinal axis (X-X') of the female element, the said female element being provided with means for locking the said male element in a fitted configuration of the said elements, the said locking means comprising at least one elongated component (40) which can move in translation parallel to an axis (X₂₇-X'₂₇) inclined obliquely relative to the fitting axis of the said elements, the said component having a cylindrical portion (40A) one end (40b) of which is designed to be engaged in a peripheral groove of a male element fitted into the said female element, the said end (40b) being partially delimited by a surface (40c) that comes into contact against a side (16c) of the said groove (16), while the said component (40) has a flange (40e) which projects radially relative to an outer radial surface (21b) of the body (21) of the said female element (A) and which is engaged between two inner protrusions (30c, 31) of a ring (30) for controlling the position of the said component, the said ring being fitted around the said body and able to move in translation (F₂, F₂') parallel to the said fitting axis (X-X'), **characterised in that** the said component (40) is provided with a claw (40f) which contacts a retaining abutment (27c) consisting of a seat (27) formed in the body (21) into which the said component is fitted by sliding insertion and held securely.

2. Joint element according to Claim 1, **characterised in that** the said contact surface (40c) is concave or convex, with a radius of curvature strictly larger than the radius of the said cylindrical portion (40A), or of overall flattened shape.

3. Joint element according to either of the preceding claims, **characterised in that** the said flange (40e) has two surfaces (40e1, 40e2) which are generally radial relative to the said fitting axis (X-X'), each surface making contact (F₃, F₄) respectively with one of the said protrusions (30c, 31).

4. Joint element according to any of the preceding claims, **characterised in that** the said surface (40c) is frustoconical and concave with an apex half-angle relative to the longitudinal axis (X₄₀-X₄₀') of the said component whose value is essentially equal to that of the angle (β) of obliqueness of the axis (X₂₇-X₂₇') parallel to which the said component can move.

5. Joint element according to Claim 4, **characterised in that** the radius of curvature of the said frustoconical surface (40c) matches that of the said side (16c), so that the said end (40b) and the said side are complementary.

6. Joint element according to any of the preceding claims, **characterised in that** the said end (40b) is also delimited by a surface (40d) forming part of a cylinder with circular cross-section and geometry complementary to that of the bottom (16a) of a peripheral groove (16) of a male element (B) that can be fitted into the said female element (A).

7. Joint element according to any of the preceding claims, **characterised in that** the said ring (30) is loaded elastically (F₄) towards a position in which a protrusion (31) exerts on the said flange (40e) a force (F₅) tending to push the said component towards a position where it locks a male element (B), while a second protrusion (30c) of the said ring enables a force (F₃) to be exerted on the said flange that tends to separate the said component from the said male element.

8. Quick-connection joint for an installation in which a fluid is kept under pressure, comprising two elements, one male (B) and one female (A), fixed at the ends of two pipe sections (C₁, C₂) and able to fit axially one into the other, **characterised in that** the female element is according to any of the preceding claims.

9. Quick-connection joint according to Claim 8, **characterised in that** the said male element (B) is provided with an outer peripheral groove (16) to receive a part (40b) of the said elongated component (40), the said groove being delimited, *inter alia,* by a surface of overall frustoconical shape (16c), and **in that** the obliqueness angle (β) between the axis (X₂₇-X₂₇') parallel to which the said component (40) can move (F₆) and the fitting axis (X-X') of the said male (B) and female (A) elements has a value essentially equal to the apex half-angle (α) of the said overall frustoconical surface.

10. Use of a quick-connection joint according to either of Claims 8 or 9 in an automobile vehicle, **characterised in that** the said male element (B) is mounted on the said automobile vehicle and connected to a pipe (C₂) for filling the fuel tank of the said vehicle.

## Patentansprüche

1. Aufnahmeelement (A) für eine Sicherheitsschnellkupplung (R), die für die lösbare Verbindung von Leitungen (C₁, C₂) für unter Druck stehendes Fluid vorgesehen ist, wobei das Element in der Lage ist, ein Einsteckelement (B) in entsprechend einer Längsachse (X-X') ineinandergesteckten Weise aufzunehmen und das Aufnahmeelement mit Mitteln zur Verriegelung des Einsteckelements im ineinandergesteckten Zustand der Elemente ausgerüstet ist, wobei die Verriegelungsmittel mindestens ein langgestrecktes Organ (40) umfassen, das in Translation parallel zu einer in Bezug auf die Einsteckachse der Elemente schrägen Achse (X₂₇ - X'₂₇) beweglich ist, wobei das Organ mit einem zylindrischen Bereich (40A) versehen ist, dessen eines Ende (40b) dazu vorgesehen ist, mit einer Umfangshohlkehle eines in das Aufnahmeelement eingesteckten Einsteckelements in Eingriff zu treten, und das Ende (40b) teilweise durch eine Fläche (40c) zum Abstützen gegen eine Seite (16c) der Hohlkehle (16) begrenzt ist, wobei das Organ (40) mit einem Ansatz (40e) versehen ist, der radial in Bezug auf eine radiale Außenfläche (21b) des Körpers (21) des Aufnahmeelementes (A) hervorspringt und der zwischen zwei Innenerhöhungen (30c, 31) eines Ringes (30) zur Steuerung der Position des Organs festgelegt ist, wobei der Ring um den Körper herum mit der Möglichkeit der Translation (F₂, F₂') parallel zur Einsteckachse (X-X') montiert ist,
**dadurch gekennzeichnet, dass** das Organ (40) mit einem Absatz (40f) zur Abstützung an einem Zurückhalteanschlag (27c) versehen ist, der durch eine in dem Körper (21) eingearbeitete Aufnahme (27) gebildet wird, in der das Organ gleitend und eingeschlossen gehalten angeordnet ist.

2. Kupplungselement nach Anspruch 1, **dadurch gekennzeichnet, dass** die Stützfläche (40c) konkav oder konvex ist mit einem Krümmungsradius, der streng größer als der Radius des zylindrischen Bereichs (40A) ist oder im Ganzen gesehen abgeflacht ist.

3. Kupplungselement nach einem der vorhergehenden Ansprüche, **dadurch gekennzeichnet, dass** der Ansatz (40e) mit zwei Flächen (40e1 und 40e2) versehen ist, die im wesentlichen radial in Bezug auf die Einsteckachse (X-X') sind und jede jeweils eine der Erhöhungen (30c, 31) in Abstützung (F₃, F₄) aufnimmt.

4. Kupplungselement nach einem der vorhergehenden Ansprüche, **dadurch gekennzeichnet, dass** die Fläche (40c) kegelförmig und konkav ist mit einem halben Kegelwinkel in Bezug auf die Längsachse (X₄₀-X'₄₀) des Organs (40), der von einer Größe im wesentlichen gleich der des Schrägwinkels (β) der Achse (X₂₇-X'₂₇) ist, zu der das Organ parallel beweglich ist.

5. Kupplungselement nach Anspruch 4, **dadurch gekennzeichnet, dass** der Krümmungsradius der kegelförmigen Fläche (40c) analog zu dem der Seite (16c) ist, wobei das Ende (40b) und die Seite somit komplementär sind.

6. Kupplungselement nach einem der vorhergehenden Ansprüche, **dadurch gekennzeichnet, dass** das Ende (40b) gleichfalls durch eine Zylinderteilfläche (40d) mit kreisförmigem Querschnitt und von komplementärer Geometrie zu der des Bodens (16a) einer Umfangshohlkehle (16) eines Einsteckelementes (B) begrenzt ist, das geeignet ist, in das Aufnahmeelement (A) eingesteckt zu werden.

7. Kupplungselement nach einem der vorhergehenden Ansprüche, **dadurch gekennzeichnet, dass** der Ring (30) elastisch in eine Position vorgespannt (F₄) ist, in der eine Erhöhung (31) auf den Ansatz (40e) eine Kraft (F₅) ausübt, die dazu neigt, das Organ in eine Blockierposition eines Einsteckelements (B) zu drücken, während eine zweite Erhöhung (30c) des Ringes auf den Ansatz eine Kraft (F₃) auszuüben erlaubt, die dazu neigt, das Organ in Bezug auf das Einsteckelement zu entfernen.

8. Schnellkupplung für eine Anlage zur Förderung von unter Druck stehendem Fluid, die zwei Elemente, ein Einsteckelement (B) und ein Aufnahmeelement (A), umfasst, die auf den Enden von zwei Leitungsstücken (C₁, C₂) befestigt sind und geeignet sind, axial ineinanderzugreifen, **dadurch gekennzeichnet, dass** das Aufnahmeelement (A) nach einem der vorhergehenden Ansprüche ausgebildet ist.

9. Schnellkupplung nach Anspruch 8, **dadurch gekennzeichnet, dass** das Einsteckelement (B) mit einer äußeren Umfangskehle (16) zur Aufnahme eines Teils (40b) des langgestreckten Elementes (40) versehen ist, wobei die Kehle unter anderem durch eine im wesentlichen kegelförmige Fläche (16c) begrenzt ist und dass der Schrägwinkel (β) zwischen der Achse (X₂₇-X'₂₇), zu der das Organ (40) parallel beweglich (F₆) ist, und der Einsteckachse (X-X') der Elemente (A, B) einen Wert im wesentlichen gleich dem halben Kegelwinkel (α) der im ganzen gesehen kegelförmigen Fläche aufweist.

10. Verwendung einer Schnellkupplung nach einem der Ansprüche 8 oder 9 in einem Kraftfahrzeug, **dadurch gekennzeichnet, dass** das Einsteckelement (B) an dem Fahrzeug befestigt ist und an eine Leitung (C₂) zur Versorgung des Kraftstofftanks des Fahrzeuges angeschlossen ist.
